# EUROPEAN PATENT SPECIFICATION

(11) **EP 2 335 436 B1**
(45) Date of publication and mention of the grant of the patent: **11.12.2013**
(21) Application number: 09744793.2
(22) Date of filing: 12.10.2009
(51) Int. Cl.: H04W 36/00, H04W 36/24

(54) **MOBILITY SOLUTION SELECTION FOR VOICE OVER EPS**
MOBILITÄTSLÖSUNGSAUSWAHL FÜR SPRACHE ÜBER EPS
SÉLECTION DE SOLUTION MOBILE POUR LA VOIX SUR EPS

(30) Priority: 15.10.2008 US 105623 P
(43) Date of publication of application: 22.06.2011
(73) Proprietor: Telefonaktiebolaget L M Ericsson (publ), 164 83 Stockholm (SE)
(72) Inventor: HALLENSTÅL, Magnus, S-187 50 Täby (SE)
(74) Representative: Sjöberg, Mats Hakan
(86) International application number: PCT/SE2009/051141
(87) International publication number: WO 2010/044729

(56) References cited:
- WO-A1-2008/058877
- WO-A1-2009/121745
- WO-A2-2008/023162
- US-A1- 2007 268 888
- VODAFONE: "Single Radio Voice Call Continuity" 22 August 2006 (2006-08-22), 3GPP DRAFT; S2-063159, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050257057 [retrieved on 2006-08-22] the whole document
- NORTEL ET AL: "S2-082946; Call flows for SRVCC from EUTRAN to GERAN/UTRAN" [Online] 7 April 2008 (2008-04-07), , XP002527736 Retrieved from the Internet: URL:http://ftp.3gpp.org/tsg_sa/WG2_Arch/TS GS2_64_Jeju/Docs/?C= =D> [retrieved on 2009-05-11] the whole document
- NOKIA SIEMENS NETWORKS ET AL: "Terms alignments and other misc. correction in 3GPP TS 23.272" 29 August 2008 (2008-08-29), 3GPP DRAFT; S2-086175 WAS 5755, CORRECTION -MISC ON 23 272-V03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050330922 [retrieved on 2008-08-29] the whole document

## Description

### TECHNICAL FIELD

Aspects of the invention relate to the field of wireless telecommunications.

### BACKGROUND

As used herein, the following abbreviations shall have the following meanings:
- 3GPP: Third Generation Partnership Project
- ACM: Address Complete Message
- BSS: Base Station Subsystem
- CAMEL: Customized Applications for Mobile networks Enhanced Logic
- CDMA: Code Division Multiple Access
- CS: Circuit Switched
- DTM/PSHO: Dual Transfer Mode/Packet Switched Handover
- eNodeB: Evolved Node B
- EPS: Evolved Packet System
- E-UTRAN: Evolved-UTRAN
- GAN: Generic Access Network
- GANC: GAN Controller
- GBR: Guaranteed Bit Rate
- GERAN: GSM EDGE Radio Access Network
- GSM: Global System for Mobile Communications
- GW: Gateway
- HLR: Home Location Register
- HO: Handover
- HSS: Home Subscriber Server
- IMS: IP Multimedia Subsystem
- IAM: Initial Address Message
- IMSI: International Mobile Subscriber Identity
- IP: Internet Protocol
- ISDN: Integrated Services Digital Network
- ISUP: ISDN User Part
- LTE: Long Term Evolution
- MM: Mobility Management
- MME: Mobility Management Entity
- MMTel: Multimedia Telephony
- MSC Mobile: Switching Center
- MSISDN: Mobile Station International Subscriber Directory Number
- Non-GBR: Non-Guaranteed Bit Rate
- PS: Packet Switched
- QCI: QoS Class Identifier
- RAN: Radio Access Network
- RANAP: Radio Access Network Application Part
- S-GW: Signaling Gateway
- SDP: Session Description Protocol
- SES: Send End Signal
- SGSN: Serving GPRS Support Node
- SRVCC: Single Radio Voice Call Continuity
- STN-SR: Station Transfer Number for SRVCC
- UE: User equipment
- UMTS: Universal Mobile Telecommunications System
- UTRAN: UMTS Radio Access Network
- VCC: Voice Call Continuity
- VDN: VCC Directory Number
- VoIP: Voice over Internet Protocol
- VPLMN: Visited Public Land Mobile Network
- WCDMA: Wideband CDMA

The 3rd Generation Partnership Project (3GPP) is a collaboration between groups of telecommunications associations, to make a globally applicable third generation (3G) mobile phone system specification within the scope of the International Mobile Telecommunications-2000 project of the International Telecommunication Union (ITU). 3GPP specifications are based on evolved Global System for Mobile Communications (GSM) specifications. 3GPP standardization encompasses Radio, Core Network and Service architecture. The project was established in December 1998.

System Architecture Evolution (SAE) is the core network architecture of 3GPP's future LTE wireless communication standard. SAE is the evolution of the GPRS Core Network, but with a simplified architecture, all IP Network, support for higher throughput and lower latency radio access networks (RANs) and support for, and mobility between, multiple heterogeneous RANs, including legacy systems as GPRS, but also non-3GPP systems such as WiMAX.

The main component of the SAE architecture is the Evolved Packet System (EPS). The EPS will be the equivalent of the GPRS networks via the Mobility Management Entity (MME), Serving Gateway and PDN Gateway subcomponents. The MME is the key control-node for the LTE access-network. The Serving Gateway routes and forwards user data packets, while also acting as an aggregation point for packet flows and a mobility anchor point for the user plane during most of the inter-eNodeB handovers. The PDN Gateway provides connectivity from the UE to external packet data networks by being the point of exit and entry of traffic for the UE, and hence the highest mobility anchor point.

The 3GPP Specification provides different methods to support a voice service via EPS. One is IMS MMTel which may be required to use SRVCC if there is no VoIP over PS (radio) bearers in the entire wide area network. SRVCC supports IMS Voice with a mechanism to move from a packet LTE or WCDMA network to the GSM, WCDMA, or cdma2000 1xRTT access and support voice service using a CS bearer rather than a packet bearer which is the primary choice for an IMS based voice service.

Another method to support a voice service via EPS is CS fallback wherein the user has access to the voice service while being connected to the LTE access, but the voice service is provided by an access that has (native) support for a CS voice service, i.e. GSM, WCDMA, or cdma2000 1xRTT, i.e. the user is moved to these accesses from LTE when originating or terminating a CS call.

One industry proposal envisions tunneling CS service over IP using the GAN and SRVCC standard. This proposal has gather vendors and operators in a industry forum called VoLGA (Voice over LTE Via GAN).

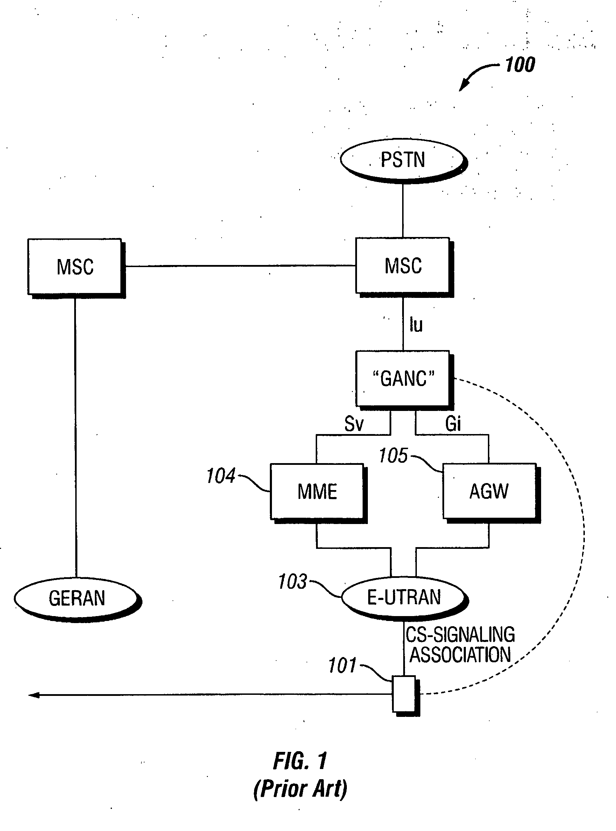

The architecture 100 in which CS over LTE using GANC is performed is seen in Figure 1. GANC is equivalent to VANC as used in the VoLGA forum.

The term GANC is used below. To support hand-over (HO), the SRVCC mechanisms are re-used such that the UE 101 simulates the SRVCC capability.

To support CS over LTE using GANC (sometimes referred to as "CS over LTE" therein), the following E-UTRAN attach procedure, in addition to 3GPPP- TS 23.401, is required. CS over LTE using GANC will use the SRVCC additions as follows:

In CS over LTE, the UE 101 includes the SRVCC capability indication as part of the UE network capability in its Attach Request message. A SRVCC capability indicator is used instead of a CS over LTE specific indicator, as no standard exists for CS over LTE using GANC. The MME 104 stores this information for what it believes to be used for SRVCC operation, but in fact is used for CS over LTE.

The eNodeB of the E-UTRAN will receive a UE SRVCC capability indication as part of UE radio capability or from the MME 104 depending on how the standard evolves.

If the subscriber is allowed to have SRVCC in the VPLMN then the HSS includes SRVCC STN-SR and MSISDN in the Insert Subscriber Data message to the MME in normal cases. However because CS over LTE might be proprietary solution only supported by a few vendors and operators, roaming outside home network with SRVCC indication will be, in normal cases, disallowed, thus only 2G and 3G will be allowed for roaming users.

To make the process work, the MME and eNodeB must accept that the UE is capable of the SRVCC solution. The eNodeB would signal that a certain HO request sent to the MME is an SRVCC HO or that the target cell capability does not support IMS Voice, or VoIP in general. The foregoing option has not yet been determined by 3GPP. The MME would use the information from the eNodeB, together with the terminal capability and subscription information downloaded from HSS during attach, to determine whether the SRVCC "bearer splitting function" and the Sv interface, both defined for SRVCC, are to be used to perform a PS to CS HO.

In 3GPP, the Sv interface in the SRVCC is between the MME and the MSC and in the industry initiative (VoLGA) the Sv interface 105 is re-used as an interface between the MME and a GANC as seen in Figure 1.

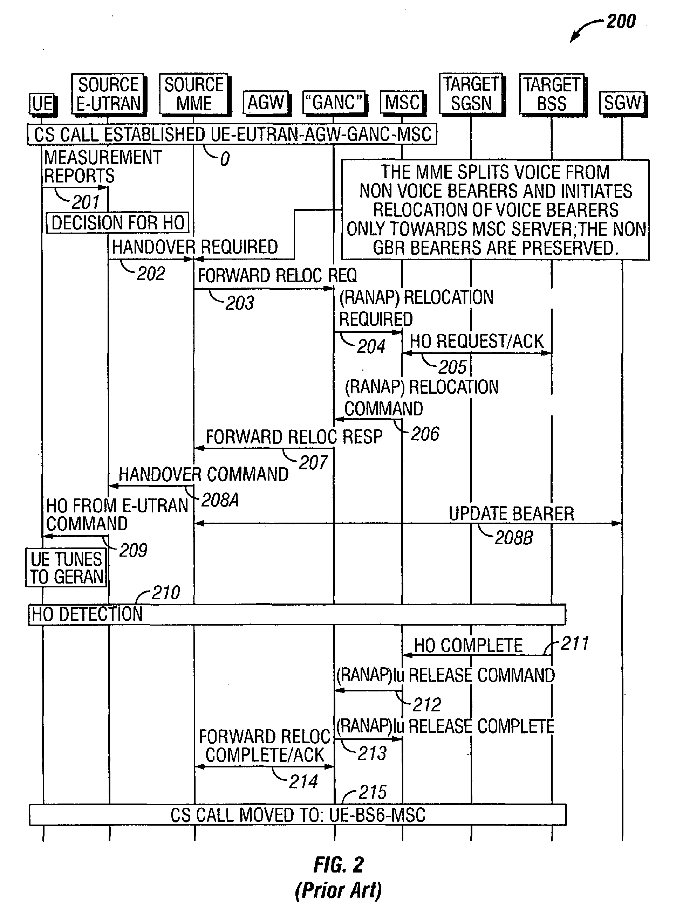

Figure 2 illustrates the HO procedure 200 for CS over LTE GANC solution re-using SRVCC procedures for a handover between CS over LTE to GSM. The procedures shows the case where the MSC connects to the GANC via an lu interface. The procedures are similar if the MSC connects to the GANC via an A interface):
Step 201. Based on UE measurement reports, the source E-UTRAN determines whether to trigger a handover to GERAN.
Step 202. The source E-UTRAN sends a Handover Required (Source to Target Transparent Container) message to the source MME. The E-UTRAN also indicates to the MME that this is a SRVCC HO operation. A SRVCC indicator is used as no CS over LTE indicator exists. Although the MME and eNodeB interpret this as SRVCC, it is a CS over LTE solution.
Step 203. Based on the QCI associated with the voice bearer (QCI 1 or similar depending on the determination of the 3GPP) and the SRVCC HO indication, the source MME splits the voice bearer from the non voice bearers and initiates the SRVCC handover procedure for the voice bearer by sending a Forward Relocation Request (VDN/MSISDN), Source to Target Transparent Container, MM Context message to the GANC. The MME receives the MSISDN from the HSS as part of the subscription profile downloaded during the E-UTRAN attach procedure. The MM Context contains security related information. The security related information will not be required if the GANC has that information. Note that VDN and MISDN may not be used by the GANC, as it is part of standard SRVCC procedure. The GANC discards the information.
Step 204. The GANC interworks the PS HO request with a RANAP Relocation Required over the lu interface to the MSC. GANC is regarded as the source RAN by the MSC. The CS Security key may need to be derived.
Step 205. The target MSC performs resource allocation with the target BSS by exchanging Handover Request/Acknowledge messages. If the Inter-MSC HO must be performed, normal inter-MSC procedures will be exchanged between the source MSC and target MSC.
Step 206. When resources have been allocated in BSS, the MSC sends a RANAP relocation command to the GANC.
Step 207. The GANC interworks the RANAP relocation command to a Forward Relocation Response (Target to Source Transparent Container) message which is sent to the source MME. The source MME acknowledges that at the end of the CS-PS handover the non-GBR bearers should be preserved.
Step 208 a. The source MME sends a Handover Command (Target to Source Transparent Container) message to the source E-UTRAN. The message includes information about the voice component only.
Step 208 b. In parallel to the previous step, the source MME exchanges Update Bearer Request/response messages with the Serving GW. The S1-U bearers are released for all EPS bearers and the voice bearer is deactivated. The non-GBR bearers are preserved. The MME is aware that a PS to CS handover has occurred due to SRVCC, so upon receipt of downlink data notification from the S-GW the MME shall not page the UE.
Step 209. Source E-UTRAN sends a HO from E-UTRAN Command message to the UE. There may be an indication to UE to inform PS to CS HO.
Step 210. HO Detection at the target BSS.
Step 211. The target BSS sends a HO Complete message to the target MSC.
Step 212. The MSC sends a RANAP release command to GANC.
Step 213. The RANAP is release complete.
Step 214. The GANC sends a Forward Relocation Complete message to the source MME, informing it that the UE has arrived on the target side. The source MME acknowledges the information by sending a Forward Relocation Complete Acknowledge message to the GANC.
Step 215. The call has moved over to CS

In standard SRVCC, the MME selects the MSC based on the target cell identity. Consequently, the MME is unable to determine which node, an MSC or GANC, it should signal to use the Sv interface procedures if both, i.e. standard SRVCC and reuse of the STRVCC procedures for CS over LTE, are present in the network.

Hence, two problems occur: (1) it is not possible to have both methods in the network, because there is only one terminal capability ("SRVCC capable") used for both methods and (2) a network cannot support SRVCC or the industry initiative solution to incoming roaming users, since the interpretation of the terminal capability ("SRVCC capable") is ambiguous.

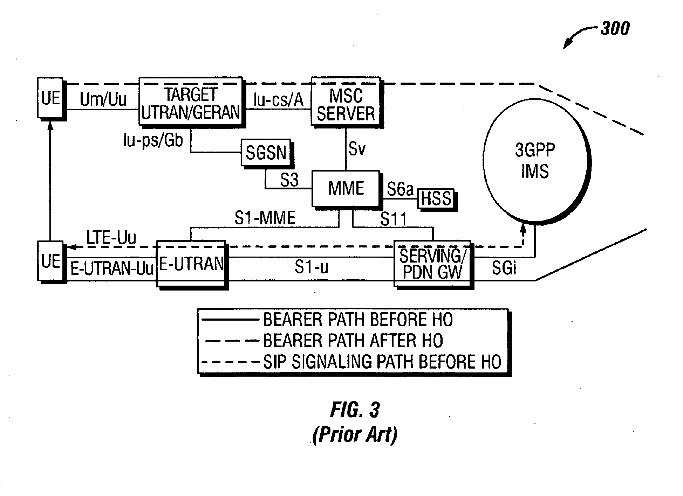

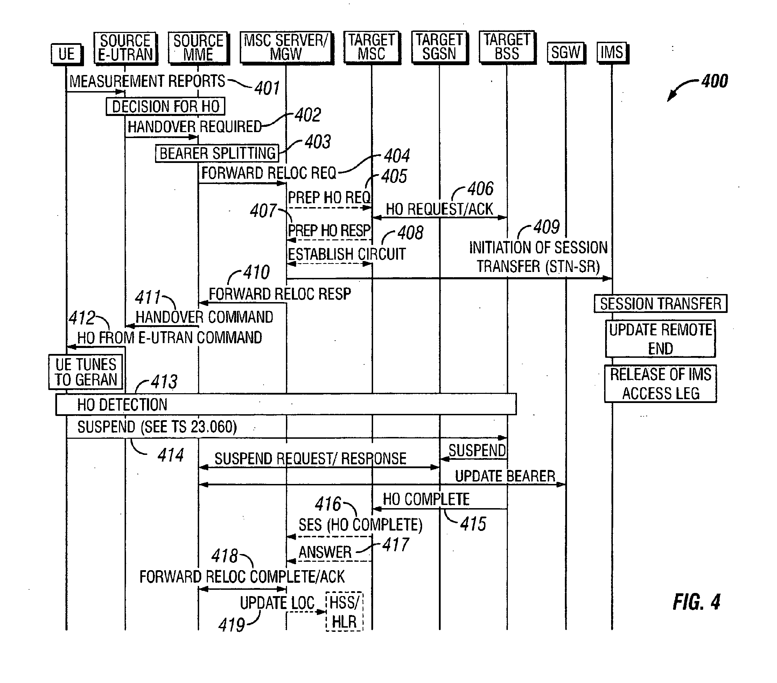

Figures 3 and 4 provide selected parts from 3GPP TS 23.216. Figure 3 illustrates the SRVCC architecture 300 for E-UTRAN to 3GPP UTRANIGERAN. Figure 4 illustrates the steps 400 for SRVCC from E-UTRAN to GERAN without DTM/PSHO support. As seen therein:
Step 401. Based on UE measurement reports, the source E-UTRAN determines to trigger an SRVCC HO to GERAN.
Step 402. The source E-UTRAN sends Handover Required (Target ID, Source to Target Transparent Container) message to the source MME. The E-UTRAN also indicates to the MME that this is a SRVCC HO operation.
Step 403. Based on the QCI associated with the voice bearer (QCI 1) and the SRVCC handover indication, the source MME splits the voice bearer from the non voice bearers and initiates the PS-CS HO procedure for the voice bearer only towards MSC Server.
Step 404. The MME sends a Forward Relocation Request (STN-SR, MSISDN, Source to Target Transparent Container, MM Context) message to the MSC server. The MSC server is selected based on the Target ID received in the Handover Required message. The MME receives the STN-SR and MSISDN from the HSS as part of the subscription profile downloaded during the E-UTRAN attach procedure. The MM Context contains security related information. The CS security key is derived by the MME from the E-UTRAN/EPS domain key as defined in TS 33.401. The CS Security key is sent in the MM Context.
Step 405. The MSC Server interworks the PS-CS handover request with a CS inter MSC handover request by sending a Prepare Handover Request message to the target MSC.
Step 406. The target MSC performs resource allocation with the target BSS by exchanging Handover Request/ Acknowledge messages.
Step 407. The target MSC sends a Prepare Handover Response message to the MSC Server.
Step 408. Establishing a circuit connection between the target MSC and the MGW associated with the MSC server e.g., using ISUP IAM and ACM messages.
Step 409. The MSC server initiates the Session Transfer by using the STN-SR, that is, by sending an ISUP IAM (STN-SR) message towards the IMS. Standard IMS Service Continuity procedures are applied for execution of the Session Transfer, as discussed in TS 23.292 and TS 23.237. During the execution of the Session Transfer procedure, the remote end is updated with the SDP of the CS access leg. The downlink flow of VoIP packets is switched towards the CS access leg at this point. Note, however, that if the MSC server is using an ISUP interface, then the initiation of the session transfer may fail if the subscriber profile including CAMEL triggers is not available prior HO (see clause 7.3.2.1 in TS 23.292 [13]).
Step 410. The MSC server sends a Forward Relocation Response (Target to Source Transparent Container) message to the source MME. The source MME preserves the non-GBR bearers at the end of the PS-CS HO.
Step 411. The source MME sends a HO Command (Target to Source Transparent Container) message to the source E-UTRAN. The message includes information about the voice component only.
Step 412. The source E-UTRAN sends a HO from E-UTRAN Command message to the UE.
Step 413. Handover Detection at the target BSS.
Step 414. The UE starts the Suspend procedure specified in TS 23.060 [10], clause 16.2.1.1.2. This triggers the Target SGSN to send a Suspend Request message to the Source MME. The MME returns a Suspend Response to the Target SGSN, which contains the MM and PDP contexts of the UE. The MME also starts the preservation of non-GBR bearers and the deactivation of the voice bearer.
Step 415. The target BSS sends a HO Complete message to the target MSC.
Step 416. The target MSC sends an SES (HO Complete) message to the MSC server.
Step 417. Completion of the establishment of the circuit connection between the MSC and the MGW associated with the MSC server is completed, e.g., with the target MSC sending ISUP Answer message to the MSC server.
Step 418. The MSC server sends a Forward Relocation Complete message to the source MME, informing it that the UE has arrived on the target side. The source MME acknowledges the information by sending a Forward Relocation Complete Acknowledge message to the MSC server.
Step 419. The MSC server may perform a MAP Update Location to the HSS/HLR if needed. This may be needed for MSC Server to receive GSM Supplementary Service information and routing of mobile terminating calls properly in certain configuration. Note, however, that this Update Location is not initiated by the UE.

After the CS voice call is terminated and if the UE is still in GERAN, then (as specified in TS 23.060 [10]) the UE shall resume PS services by sending a Routing Area Update Request message to the SGSN. The Update Type depends on the mode of operation of the GERAN network, e.g., in mode I, a Combined RA/LA Update is used and in mode II or III, a Routing Area Update is used.

*Handover procedures using Single Radio Voice Call Continuity can also be read in documents* VODAFONE: "Single Radio Voice Call Continuity", 2006-08-22, 3GPP DRAFT, S2-063159; NORTEL ET AL; "S2-082946; Call flows for SRVCC from EUTRAN to GERAN/UTRAN, 2008-04-07, WO2008058877 *and* WO2008023162*.*

### SUMMARY

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later. The present invention is directed to a new functional entity on the Sv interface that examines the IMSI during HO and, based on the examination, determines whether to use SRVCC or CS over LTE, using GAN.

### BRIEF DESCRIPTION OF THE DRAWINGS

In the following section, the invention will be described with reference to exemplary embodiments illustrated in the figures, in which:
FIG. 1 illustrates the architecture for the industry initiative CS over LTE using GANC (in VoLGA GANC is replaced by the term VANC);
FIG. 2 illustrates how the HO procedure for CS over LTE GANC solution reusing SRVCC procedures for a handover between CS over LTE to GSM will work;
FIG. 3 illustrates the SRVCC architecture for E-UTRAN to 3GPP UTRAN/GERAN;
FIG. 4 illustrates the steps 400 for SRVCC from E-UTRAN to GERAN without DTM/PSHO support;
FIG. 5 illustrates an architecture for performing a first HO selection function in accordance with the teachings of the present invention;
FIG. 5a illustrates the steps of a first method of the first HO selection function in accordance with the teachings of the present invention;
FIG. 5b illustrates the steps of a second method of the first HO selection function in accordance with the teachings of the present invention;
FIG. 5c illustrates the steps of a third method of the first HO selection function in accordance with the teachings of the present invention;
FIG. 5d illustrates the steps of a fourth method of the first HO selection function in accordance with the teachings of the present invention;
FIG. 6 illustrates an architecture for performing a second HO selection function in accordance with the teachings of the present invention; and

### DETAILED DESCRIPTION

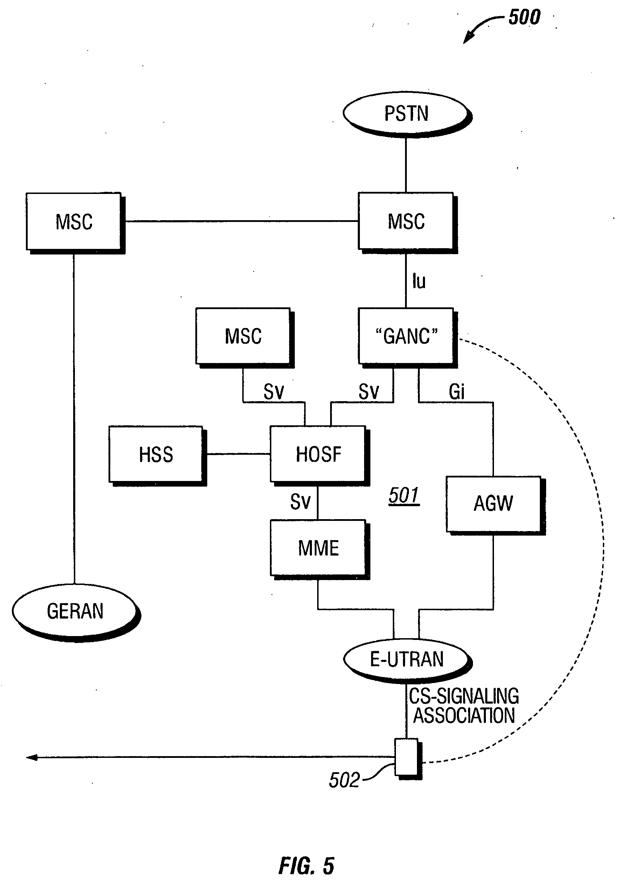

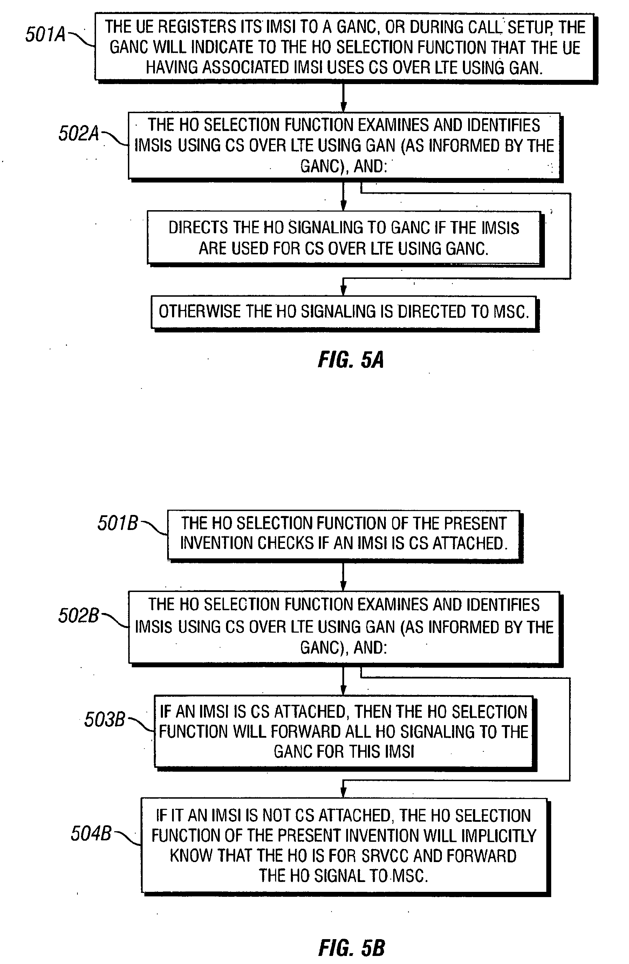

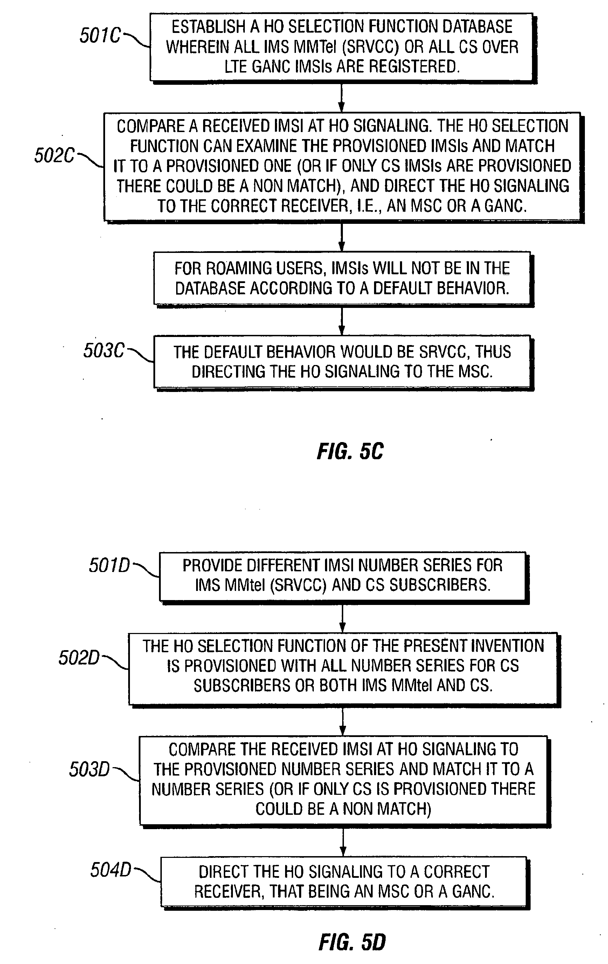

Figure 5 illustrates an architecture 500 of a first HO selection function (HOSF) 501 in accordance with the teachings of the present invention. The HO selection function 501 of the present invention can be implemented in a software program embodied on a computer readable medium executed by computer hardware so as to perform the methods described herein.

The HO selection function 501 of the present invention examines, during HO, the IMSI of the SIM in the UE and, based on the examination, determines if the HO is related to SRVCC or if it is related to CS over LTE using GANC. There are four methods by which the HO selection function 501 of the present invention obtains information so as to determine whether a certain HO shall be directed to the GANC or the MSC. These are as described in Figures 5a-5d.

Referring to Figure 5a, in step 501A, the UE registers its IMSI to a GANC, or during call setup, the GANC will indicate to the HO selection function of the present invention (501 of Figure 5) that the UE (502 of Figure 5) having the associated IMSI uses CS over LTE using GAN. In step 502A, the HO selection function examines and identifies IMSIs using CS over LTE using GAN (as informed by the GANC), and directs the HO signaling to GANC if the IMSIs are used for CS over LTE using GANC. Otherwise the HO signaling is directed to MSC. The present invention overcomes another problem inherent with CS over LTE using GANC-identifying the correct GANC. The HO selection function (501 of Figure 5) of the present invention will not only hold information about an IMSI but also to which GANC the IMSI is registered. By holding this information, the HO selection function is able to direct HO signaling to a correct GANC.

Referring to Figure 5b, in step 501B, the HO selection function of the present invention (501 of Figure 5) checks if an IMSI is CS attached. In step 502B, when the CS HO is commenced (Forward Relocation request from MME), the HO selection function of the present invention (501 of Figure 5) checks with the HLR to determine if an IMSI is CS attached. If an IMSI is CS attached, then the HO selection function of the present invention will forward all HO signaling to the GANC for this IMSI in step 503B. If an IMSI is not CS attached, the HO selection function of the present invention will implicitly know that the HO is for SRVCC and forward the HO signaling to MSC as seen in step 504B.

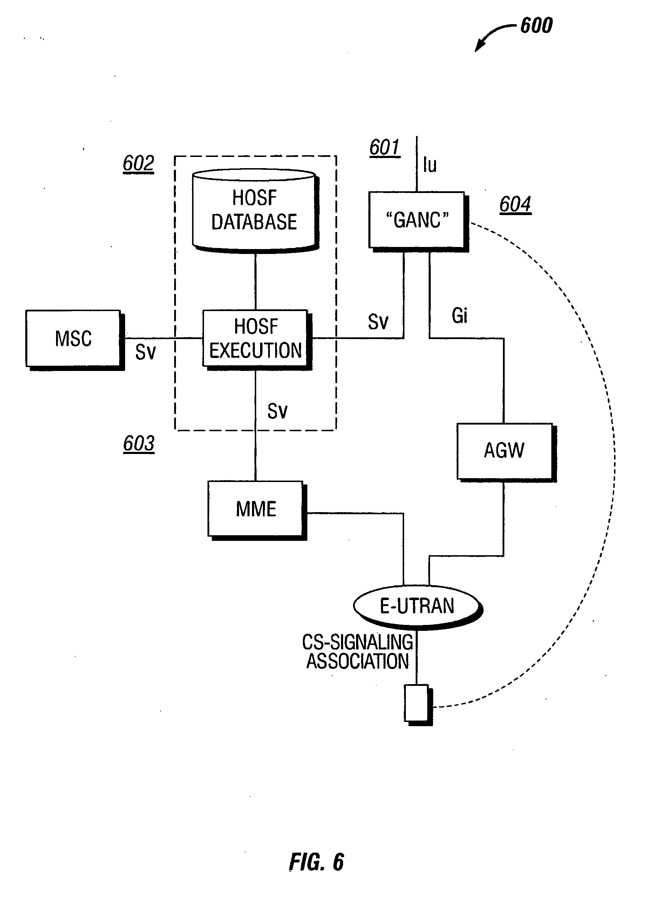

Referring to Figure 5c, in step 501C, the HO selection function of the present invention has a database (See, for example, Figure 6) wherein all IMS MMtel (SRVCC) or all CS over LTE GANC IMSIs are registered. By comparing a received IMSI at HO signaling in step 502C, the HO selection function of the present invention can examine the provisioned IMSIs and match it to a provisioned one (or if only CS IMSIs are provisioned there could be a non match), and direct the HO signaling to the correct receiver, i.e. an MSC or a GANC. For roaming users, IMSIs will not be in the database thus the HO selection function of the present invention would perform according to a default behavior. The default behavior would be SRVCC, thus directing the HO signaling to the MSC as seen in step 503C. In this method it is also possible to separate the execution part from the database part as seen in Figure 6.

Referring to Figure 5d, in step 501D, there are different IMSI number series for IMS MMtel (SRVCC) and CS subscribers. The HO selection function of the present invention is provisioned with all number series for CS subscribers or both IMS MMTel and CS in step 502D. By comparing, in step 503D, the received IMSI at HO signaling, the HO selection function of the present invention examines the provisioned number series and matches it to a number series (or if only CS is provisioned there could be a non match), and directs the HO signaling to a correct receiver, as seen in step 504D, that is to an MSC or a GANC. For roaming users, the IMSI series will not be in the database, thus the HO selection function of the present invention performs according to a default behavior. The default behavior is SRVCC, thus directing the HO signaling to the MSC.

As seen in an alterative embodiment of the present invention in Figure 6, the HO selection function 601 of the present invention can be divided into a database part 602 and an execution part 603. In such embodiment, the GANC 604 contacts the database part 602 directly to store the information that a certain IMSI is registered. At HO signaling, the execution part 603 of the HO selection function 601 of the present invention, checks the database part 602 of an IMSI presence. The database part 602 can be a separate database or an extension to an HSS.

Regardless of the method used, the HO selection function of the present invention can be embodied in a stand alone node or it can be part of the GANC, MME or MSC. Further, as seen in Figure 6, it can be divided in a database part and a processing part. As can be seen, the HO selection function of the present invention has the same functionality of the MME to route HO signaling to a correct MSC based on target cell identification.

An advantage of the present invention is that it facilitates the coexistence of the SRVCC and current industry initiatives to support CS voice over EPS using GANC, enabling an operator to support CS voice over EPS using GANC and IMS MMTel with SRVCC in a network at the same time.

Another advantage of the present invention is that it enables a way to find a correct GANC for the HO signaling

The present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a computer system with a computer program that, when being loaded and executed, controls the computer system such that it carries out the methods described herein.

The present invention may also be embedded in a computer program product, which comprises all the features enabling the implementation of the methods described herein, and which when loaded in a computer system and executed by a processor is able to carry out these methods. Computer program in the present context means any expression, in any language, code or notation, of a set of instructions intended to cause a system having an information processing capability to perform a particular function either directly or after either or both of the following conversion to another language, code or notation or reproduction in a different material form

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for directing handover signaling to a selected control node in a communications network, the method comprising the steps of:
examining (502A, 502B, 502C, 503D) by a handover selector (501), the International Mobile Subscriber Identity, IMSI, of a user equipment, UE, (502) during handover; and
based on the examination, determining (502A, 502B, 502C, 503D) whether Single Radio Voice Call Continuity, SRVCC, or Circuit Switched over Long Term Evolution using a Generic Access Network Controller (CS over LTE GANC) shall be used in the handover;
when SRVCC is to be used, the handover selector directing (504B, 503C) handover signaling to a Mobile Switching Center, MSC; and
when CS over LTE GANC is to be utilized, the handover selector directing (503B) the handover signaling to the GANC.

2. The method according to claim 1, wherein the handover selector is implemented on an Sv interface between a Mobility Management Entity, MME, on one side and the MSC and the GANC on the other side.

3. The method according to claim 2, wherein when the UE registers its IMSI to the GANC, or during call setup, the GANC indicates to the handover selector that the UE having the associated IMSI uses CS over LTE GANC.

4. The method according to claim 3, wherein the handover selector stores an identify of the GANC having the user's IMSI registered within, and selects said GANC for the CS over LTE GANC handover procedure.

5. The method according to claim 4, wherein the handover selector is divided into a database part and an execution part, wherein the database part registers all SRVCC and/or all CS over LTE GANC IMSIs, and the execution part examines the UE's IMSI and matches the UE's IMSI to a registered IMSI, and directs the handover signaling to the appropriate control node, either the MSC or the GANC.

6. The method according to claim 2, further comprising the steps of:
the handover selector checking with the UE's Home Location Register to determine if the IMSI is CS attached;
the handover selector forwarding all handover signaling to the GANC when the IMSI is CS attached; and
the handover selector forwarding the handover signaling to the MSC when the IMSI is not CS attached.

7. The method according to claim 2, wherein, if there are different IMSI number series for IMS and CS subscribers, the handover selector is provisioned with all number series for CS subscribers or both IMS MMTel and CS.

8. The method according to claim 7, further comprising the steps of:
examining the received IMSI during handover signaling;
matching the received IMSI to a number series; and
directing the handover signaling to either the MSC or the GANC, as appropriate.

9. An apparatus for directing handover signaling to a selected control node in a communications network, the apparatus comprising:
a handover selection function, HOSF, circuit (501) having an examining means for examining the International Mobile Subscriber Identity, IMSI, of a user equipment, UE, during handover;
a determination means for determining, based on the examination, whether Single Radio Voice Call Continuity, SRVCC, or Circuit Switched over Long Term Evolution using a Generic Access Network Controller (CS over LTE GANC) shall be utilized in the handover; and
signal directing means for directing handover signaling to a Mobile Switching Center, MSC, when SRVCC is to be utilized, and for directing the handover signaling to the GANC when CS over LTE GANC is to be utilized.

10. The apparatus according to claim 9, wherein the HOSF circuit is implemented on an Sv interface between a Mobility Management Entity, MME, on one side and the MSC and the GANC on the other side.

11. The apparatus according to Claim 9, wherein the HOSF circuit is implemented with a database part (602) and an execution part (603), wherein the database part registers all SRVCC and/or all CS over LTE GANC IMSIs, and the execution part examines the UE's IMSI and matches the UE's IMSI to a registered IMSI, and directs the handover signaling to the appropriate control node, either the MSC or the GANC.

12. The apparatus according to Claim 9, wherein the HOSF circuit is operable to check with the UE's Home Location Register to determine if the IMSI is CS attached, and if the IMSI is CS attached, to forward all handover signaling to the GANC, and if the IMSI is not CS attached, to forward the handover signaling to the MSC.

13. The apparatus according to claim 9, wherein, if there are different IMSI number series for IMS and CS subscribers, the HOSF circuit is provisioned with all number series for CS subscribers or both IMS MMTel and CS.

14. The apparatus according to claim 13, wherein the HOSF circuit is operable to examine the received IMSI during handover signaling, match the received IMSI to a number series, and direct the handover signaling to either the MSC or the GANC, as appropriate.

## Patentansprüche

1. Verfahren zum Leiten von Handover-Signalisierung an einen ausgewählten Steuerknoten in einem Kommunikationsnetz, wobei das Verfahren die folgenden Schritte umfasst:
Prüfen (502A, 502B, 502C, 503D) der internationalen Mobilteilnehmerkennung, IMSI, eines Benutzergeräts, UE, (502) während des Handovers durch einen Handover-Selektor (501); und
auf der Basis der Prüfung bestimmen (502A, 502B, 502C, 503D), ob Single Radio Voice Call Continuity (Einzel-Funksprachruf-Kontinuität), SRVCC, oder Leitungsvermittlung über langfristige Evolution unter Verwendung eines generischen Zugangsnetz-Controllers (CS über LTE-GANC) beim Handover verwendet werden soll;
wenn SRVCC verwendet werden soll, leitet (504B, 503C) der Handover-Selektor Handover-Signalisierung an eine Mobilvermittlungsstelle, MSC; und
wenn CS über LTE-GANC genutzt werden soll, leitet (503B) der Handover-Selektor die Handover-Signalisierung an den GANC.

2. Verfahren nach Anspruch 1. worin der Handover-Selektor auf einer Sv-Schnittstelle zwischen einer Mobilitätsmanagement-Entität, MME, auf einer Seite und der MSC und dem GANC auf der anderen Seite implementiert ist.

3. Verfahren nach Anspruch 2 worin, wenn das UE seine IMSI beim GANC registriert oder der GANC während des Rufaufbaus dem Handover-Selektor anzeigt, dass das UE mit der assoziierten IMSI CS über LTE-GANC verwendet.

4. Verfahren nach Anspruch 3, worin der Handover-Selektor eine Identität des GANC speichert, in dem die IMSI des Benutzers registriert ist, und den GANC für die CS über LTE-GANC-Handover-Prozedur auswählt.

5. Verfahren nach Anspruch 4, worin der Handover-Selektor in einen Datenbankteil und einen Ausführungsteil geteilt ist, worin der Datenbankteil alle SRVCC- und/oder CS über LTE-GANC-IMSIs registriert und der Ausführungsteil die IMSI des UE prüft und die IMSI des UE mit einer registrierten IMSI matcht und die Handover-Signalisierung an den geeigneten Steuerknoten leitet: entweder an die MSC oder den GANC.

6. Verfahren nach Anspruch 2, außerdem die folgenden Schritte umfassend:
der Handover-Selektor prüft mit dem Heimatregister des UE, um zu bestimmen, ob die IMSI CS(leitungsvermittelt)-angeschlossen ist;
der Handover-Selektor leitet die gesamte Handover-Signalisierung an den GANC weiter, wenn die IMSI CS-angeschlossen ist; und
der Handover-Selektor leitet die Handover-Signalisierung an die MSC weiter, wenn die IMSI nicht CS-angeschlossen ist.

7. Verfahren nach Anspruch 2. worin, falls es verschiedene IMSI-Nummernfolgen für IMS- und CS-Teilnehmer gibt, der Handover-Selektor mit allen Nummernfolgen für CS-Teilnehmer oder sowohl IMS(IP-Multimedia-Subsystem)/MMTel(Multimedia-Telefonie) als auch CS versorgt wird.

8. Verfahren nach Anspruch 7, außerdem die folgenden Schritte umfassend:
Prüfen der empfangenen IMSI während der Handover-Signalisierung;
Matchen der empfangenen IMSI mit einer Nummernfolge; und
Leiten der Handover-Signalisierung je nach Geeignetheit entweder an die MSC oder den GANC.

9. Vorrichtung zum Leiten von Handover-Signalisierung an einen ausgewählten Steuerknoten in einem Kommunikationsnetz, wobei die Vorrichtung umfasst:
eine HOSF(Handover-Auswahlfunktion)-Schaltung (501) mit einem Prüfmittel zum Prüfen der internationalen Mobilteilnehmerkennung, IMSI, eines Benutzergeräts, UE, während des Handovers;
ein Bestimmungsmittel, um auf der Basis der Prüfung zu bestimmen, ob Single Radio Voice Call Continuity (Einzel-Funksprachruf-Kontinuität), SRVCC, oder Leitungsvermittlung über langfristige Evolution unter Verwendung eines generischen Zugangsnetz-Controllers (CS über LTE-GANC) beim Handover genutzt werden soll; und
Signalleitmittel zum Leiten von Handover-Signalisierung an eine Mobilvermittlungsstelle, MSC, wenn SRVCC genutzt werden soll, und zum Leiten der Handover-Signalisierung an den GANC, wenn CS über LTE-GANC genutzt werden soll.

10. Vorrichtung nach Anspruch 9, worin die HOSF-Schaltung auf einer Sv-Schnittstelle zwischen einer Mobilitätsmanagement-Entität, MME, auf einer Seite und der MSC und dem GANC auf der anderen Seite implementiert ist.

11. Vorrichtung nach Anspruch 9, worin die HOSF-Schaltung mit einem Datenbankteil (602) und einem Ausführungsteil (603) implementiert ist, worin der Datenbankteil alle SRVCC- und/oder CS über LTE-GANC-IMSIs registriert und der Ausführungsteil die IMSI des UE prüft und die IMSI des UE mit einer registrierten IMSI matcht und die Handover-Signalisierung an den geeigneten Steuerknoten leitet: entweder an die MSC oder den GANC.

12. Vorrichtung nach Anspruch 9, worin die HOSF-Schaltung betriebsfähig ist, mit dem Heimatregister des UE zu prüfen, um zu bestimmen, ob die IMSI CS-angeschlossen ist, und falls die IMSI CS-angeschlossen ist, die gesamte Handover-Signalisierung an den GANC weiterzuleiten, und falls die IMSI nicht CS-angeschlossen ist, die Handover-Signalisierung an die MSC weiterzuleiten.

13. Vorrichtung nach Anspruch 9, worin, falls es verschiedene IMSI-Nummernfolgen für IMS- und CS-Teilnehmer gibt, die HOSF-Schaltung mit allen Nummernfolgen für CS-Teilnehmer oder sowohl IMS/MMTel als auch CS versorgt wird.

14. Vorrichtung nach Anspruch 13, worin die HOSF-Schaltung betriebsfähig ist, die empfangene IMSI während der Handover-Signalisierung zu prüfen, die empfangene IMSI mit einer Nummernfolge zu matchen und die Handover-Signalisierung je nach Geeignetheit entweder an die MSC oder den GANC zu leiten.

## Revendications

1. Procédé pour diriger une signalisation de transfert vers un noeud de contrôle sélectionné dans un réseau de communication, le procédé comprenant les étapes suivantes :
examiner (502A, 502B, 502C. 503D) par l'intermédiaire d'un sélectionneur de transfert (501), l'identité internationale d'abonné mobile, IMSI, d'un équipement d'utilisateur, UE, (502) au cours d'un transfert ; et
sur la base de l'examen, déterminer (502A, 502B, 502C, 503D) si une continuité d'appel vocal radio unique, SRVCC. ou une commutation de circuit sur une évolution à long terme utilisant un contrôleur de réseau d'accès générique (CS sur LTE GANC) sera utilisée dans le transfert ;
lorsqu'une SRVCC doit être utilisée, le sélectionneur de transfert dirige (504B, 503C) une signalisation de transfert vers un centre de commutation de mobile, MSC ; et
lorsqu'une CS sur LTE GANC doit être utilisée, le sélectionneur de transfert dirige (503B) la signalisation de transfert vers le GANC.

2. Procédé selon la revendication 1, dans lequel le sélectionneur de transfert est mis en oeuvre sur une interface Sv entre une entité de gestion de mobilité, MME, d'un côté, et le MSC et le GANC de l'autre côté.

3. Procédé selon la revendication 2, dans lequel lorsque l'UE enregistre son IMSI auprès du GANC, ou au cours de la configuration de l'appel, le GANC indique au sélectionneur de transfert que l'UE ayant l'IMSI associée utilise une CS sur LTE GANC.

4. Procédé selon la revendication 3. dans lequel le sélectionneur de transfert stocke une identité du GANC dans lequel est enregistrée l'IMSI de l'utilisateur, et sélectionne ledit GANC pour la procédure de transfert de CS sur LTE GANC.

5. Procédé selon la revendication 4, dans lequel le sélectionneur de transfert est divisé en une partie base de données et une partie exécution, où la partie base de données enregistre toutes les IMSI de SRVCC et/ou de CS sur LTE GANC, et la partie exécution examine l'IMSI de l'UE et fait correspondre l'IMSI de l'UE à une IMSI enregistrée, et dirige la signalisation de transfert vers le noeud de contrôle approprié, soit le MSC, soit le GANC.

6. Procédé selon la revendication 2, comprenant en outre les étapes suivantes :
le sélectionneur de transfert vérifie auprès de l'enregistreur de localisation nominal de l'UE pour déterminer si l'IMSI est liée à la CS ;
le sélectionneur de transfert réachemine toutes les signalisations de transfert vers le GANC lorsque l'IMSI est liée à la CS ; et
le sélectionneur de transfert réachemine la signalisation de transfert vers le MSC lorsque l'IMSI n'est pas liée à la CS.

7. Procédé selon la revendication 2, dans lequel, s'il y existe différentes séries de numéros d'IMSI pour des abonnées CS et de IMS, le sélectionneur de transfert est pourvu de toutes les séries de numéros pour les abonnées CS ou à la fois CS et IMS MMTel.

8. Procédé selon la revendication 7, comprenant en outre les étapes suivantes :
examiner l'IMSI reçue au cours de la signalisation de transfert ;
faire correspondre l'IMSI reçue à une série de numéros ; et
diriger la signalisation de transfert vers soit le MSC, soit le GANC, tel qu'approprié.

9. Appareil pour diriger une signalisation de transfert vers un noeud de contrôle sélectionné dans un réseau de communication, l'appareil comprenant :
un circuit à fonction de sélection de transfert, HOSF, (501) ayant un moyen d'examen pour examiner l'identité internationale d'abonné mobile, IMSI, d'un équipement d'utilisateur, UE, au cours du transfert ;
un moyen de détermination pour déterminer, sur la base de l'examen, si une continuité d'appel vocal radio unique, SRVCC, ou une commutation de circuit sur une évolution à long terme utilisant un contrôleur de réseau d'accès générique (CS sur LTE GANC) sera utilisée dans le transfert ; et
un moyen de direction de signal pour diriger une signalisation de transfert vers un centre de commutation de mobile, MSC, lorsque une SRVCC doit être utilisée, et pour diriger la signalisation de transfert vers le GANC lorsqu'une CS sur LTE GANC doit être utilisée.

10. Appareil selon la revendication 9, dans lequel le circuit HOSF est mis en oeuvre sur une interface Sv entre une entité de gestion de mobilité, MME, d'un côté, et le MSC et le GANC de l'autre côté.

11. Appareil selon la revendication 9, dans lequel le circuit HOSF est mis en oeuvre avec une partie base de données (602) et une partie exécution (603), où la partie base de données enregistre toutes les IMSI de SRVCC et/ou CS sur LTE GANC, et la partie exécution examine l'IMSI de l'UE et fait correspondre l'IMSI de l'UE à une IMSI enregistrée, et dirige la signalisation de transfert vers le noeud de contrôle approprié, soit le MSC, soit le GANC.

12. Appareil selon la revendication 9, dans lequel le circuit HOSF est utilisable pour vérifier auprès de l'enregistreur de localisation nominal de l'UE pour déterminer si l'IMSI est liée à la CS, et si l'IMSI est liée à la CS, pour transférer toutes les signalisations de transfert vers le GANC, et si l'IMSI n'est pas liée à la CS, pour transférer la signalisation de transfert vers le MSC.

13. Appareil selon la revendication 9, dans lequel, s'il existe différentes séries de numéros d'IMSI pour des abonnées CS et IMS, le circuit HOSF est pourvu de toutes les séries de numéros pour des abonnées CS ou à la fois CS et IMS MMTel.

14. Appareil selon la revendication 13, dans lequel le circuit HOSF est utilisable pour examiner l'IMSI reçue au cours de la signalisation de transfert, pour faire correspondre l'IMSI reçue à une série de numéros, et pour diriger la signalisation de transfert vers soit le MSC, soit le GANC, tel qu'approprié.
